# EUROPÄISCHE PATENTANMELDUNG

(11) **EP 0 601 487 A1**
(43) Veröffentlichungstag der Anmeldung: **15.06.1994**
(21) Anmeldenummer: 93119464.1
(22) Anmeldetag: 02.12.1993
(51) Int. Cl.: A47J 41/02

(54) **Kanne**

(30) Priorität: 07.12.1992 DE 4241137
(71) Anmelder: alfi Zitzmann GmbH, D-97877 Wertheim (DE)
(72) Erfinder: Ott, Michael, Dipl.-Ing., D-97877 Wertheim (DE)
(74) Vertreter: Schwan, Gerhard, Dipl.-Ing.

(57) **Zusammenfassung**

Die vorliegende Erfindung betrifft eine Kanne, insbesondere Isolierkanne, mit einem nach oben hin offenen Körper, der durch ein drehbar in einer Ausgußöffnung (24) gehaltenes Verschlußstück (26) verschließbar ist. Die Erfindung ermöglicht die gestalterische freie Herstellung optisch ansprechender Kannen mit einer guten Abdichtfunktion in Verschlußstellung des Verschlußstücks (26). Diese Aufgabe wird dadurch gelöst, daß in dem Verschlußstück (26) zumindest ein Ausgußkanal (32) angeordnet ist, der sich von der Kanneninnenseite nach außen erstreckt.

## Beschreibung

Die Erfindung betrifft eine Kanne, insbesondere Isolierkanne, gemäß dem Oberbegriff des Anspruchs 1.

Es sind Isolierkannen bekannt, deren nach oben hin offener Körper durch einen drehbaren Deckel verschließbar ist. Der Deckel ist mittels eines Gewindes in der Ausgußöffnung gehalten und wirkt in zugedrehter Schließstellung mit einer Abdichtfläche im Randbereich der Ausgußöffnung zusammen. Beim Aufschrauben, respektive Hochdrehen, des Deckels wird die Abdichtfläche des Deckels von der Abdichtfläche im Randbereich der Ausgußöffnung gelöst und die in der Kanne befindliche Flüssigkeit kann über den im oberen Bereich des Kannenkörpers ausgebildeten Ausguß entleert werden. Bei diesen Kannen ist es jedoch nachteilhaft, daß die in der Kanne befindliche Flüssigkeit beim Ausgießen über das im Randbereich der Ausgußöffnung angeordnete Gewinde läuft, wodurch dies zum einen in seiner Abdichtfunktion beeinträchtigt wird und zum anderen relativ aufwendig zu reinigen ist.

Der Erfindung liegt die Aufgabe zugrunde, eine optisch ansprechende Kanne der obengenannten Art zu schaffen, die auch nach wiederholtem Gebrauch ihre Dichtfunktion im Verschlußbereich beibehält und die relativ einfach zu reinigen ist.

Diese Aufgabe wird bei einer Kanne der obengenannten Art erfindungsgemäß durch die kennzeichnenden Merkmale des Anspruchs 1 gelöst. Vorteilhafte Weiterbildungen der Erfindung sind Gegenstand der Unteransprüche.

Erfindungsgemäß ist in dem Deckel bzw. dem Verschlußstück der Kanne der Ausgußkanal angeordnet, der vom Kanneninneren nach außen führt. Die Flüssigkeit gelangt daher beim Ausschütten nicht über die Dichtfläche zwischen dem Deckel und dem Kannenkörper.

Der Deckel ist vorzugsweise als in etwa pistolenartiger Stutzen ausgebildet, dessen dem Griff entsprechende Schenkel in der Ausgußöffnung des Kannenkörpers, z.B. über einen Bajonettverschluß, drehbar gehalten ist. Das Verschlußstück ist somit zum Befüllen der Kanne leicht und schnell vom Kannenkörper lösbar. Der Ausgußkanal mündet in das Kanneninnere vorzugsweise azentrisch zur Drehachse des Deckels, wodurch kannenseitig im Bereich der Ausgußöffnung eine Abdichtfläche angeordnet werden kann, die den Ausgußkanal verschließt, wenn der Deckel in eine bestimmte Winkellage gedreht wird. So kann z.B. erreicht werden, daß der Ausgußkanal nur dann freigegeben ist, wenn dessen nach außen weisendes Mundstück in eine zum Ausgießen günstige Öffnungsstellung gedreht ist. Die Abdichtfläche ist vorzugsweise als Zylindermantelfläche im Bereich der Ausgußöffnung der Kanne ausgebildet, wobei der deckelseitige Ausgußkanal in diesem Fall radial in die Kanne mündet.

Die Erfindung ermöglicht weiterhin eine freie Gestaltung des Kannenkörpers, da der Körper nicht mit einem Ausgießer wie beim Stand der Technik zu versehen sein braucht. Der Ausgießer ist erfindungsgemäß in dem Deckel angeordnet, z.B. in Art eines zylinder-, konus- oder kegelförmigen Stutzens, der optisch ansprechend gestaltet sein kann.

Der Deckel enthält vorzugsweise einen Entlüftungskanal, durch den die Kanne belüftet werden kann, wenn die Flüssigkeit so schnell ausgeschüttet wird, daß der gesamte Querschnitt des Ausgußkanals von Flüssigkeit durchströmt wird. Dieser Entlüftungskanal mündet vorzugsweise oberhalb der Ausgußmündung des Ausgußkanals an der Oberseite des Deckels nach außen. In das Innere der Kanne mündet der Entlüftungskanal vorzugsweise im hinteren oberen Bereich der Kanne, in dem sich beim Ausgießen normalerweise keine Flüssigkeit befindet. Das kanneninnenseitige Ende des Entlüftungskanals kann auch beispielsweise nicht imn Deckel, sondern in der kannenseitigen Ausgußöffnung ausgebildet sein, wobei eine Verbindung des deckelseitigen und des kannenseitigen Entlüftungskanals nur dann vorliegt, wenn sich der Deckel mit dem Ausgußkanal in Öffnungsstellung befindet. Das kanneninnenseitige Ende des Entlüftungskanals kann mit einem Schwimmer oder mit einem Ventil versehen sein, um das Eindringen von Flüssigkeit zu vermeiden.

Die Ausgußöffnung der Kanne kann sich vom oberen Kannenbereich senkrecht oder in einem beliebigen Winkel schräg nach oben erstrecken. Auch dies bietet zusammen mit der relativ freien Gestaltungsmöglichkeit des Deckels eine hohe gestalterische Freiheit bei der Konzeption der Kanne.

Die Erfindung wird nachfolgend beispielsweise anhand der schematischen Zeichnung beschrieben. Diese zeigt einen Längsschnitt durch eine Isolierkanne.

Die Isolierkanne 10 enthält einen Kannenkörper 12, bestehend aus einem oberen Teil 14 und einem unteren Teil 16, die durch eine formschlüssige Nut/Federverbindung miteinander verbunden sind.

Die zum Boden weisende Unterseite des unteren Kannenteils 16 weist ein Gewinde auf, in dem ein Bodenteil 18 drehbar gehalten ist. Auf diesem Bodenteil 18 ist ein zylindrischer doppelwandiger und evakuierter Glas- oder Metallbehälter 20 abgestützt, dessen obere freie Kante an einer Dichtung 22 anliegt, die wiederum an dem oberen Kannenteil 14 abgestützt ist. Der obere Kannenteil 14 enthält eine schräg nach oben weisende Ausgußöffnung 24, in der ein Deckel bzw. Verschlußstück 26 mittels eines Bajonettverschlusses 28 drehbar gehalten ist. Das Verschlußstück 26 ist pistolenförmig ausgebildet. Der dem Griff der Pistole entsprechende Schenkel des Verschlußstückes 26 ist in der Ausgußöffnung 24 des oberen Kannenteils gehalten und weist Dichtungsringe 30 auf, die ein Eindringen von Flüssigkeit in den Bereich des Bajonettverschlusses verhindern sollen. In dem Verschlußstück 26 ist ein Ausgußkanal 32 ausgebildet, der bezüglich der Kannenachse im wesentlichen radial nach außen weist, der in Achsrichtung des Ausgußkanals 32 mittels einer Platte 33 verschlossen ist und der eine radiale Eintrittsöffnung 34 aufweist, durch die der Ausgußkanal 32 in das Innere des doppelwandigen Behälters 20 mündet. Im die radiale Eintrittsöffnung 34 umgebenden Bereich der Ausgußöffnung 24 sind Abdichtflächen 36 ausgebildet, die sicherstellen, daß die radiale Eintrittsöffnung 34 nur in der abgebildeten Öffnungsstellung des Verschlußstückes 26 offen ist. Wird das Verschlußstück in die gestrichelt dargestellte Schließstellung gedreht, so ist die radiale Eintrittsöffnung 34 durch die Abdichtfläche 36 der Ausgußöffnung 24 verschlossen.

Das Verschlußstück 26 weist ferner einen deckelseitigen Entlüftungskanal 38 auf, der in der dargestellten Öffnunggstellung in einen kannenseitigen Entlüftungskanal 40 übergeht, der in den hinteren oberen Bereich des doppelwandigen Behälters 20 mündet. Durch diesen Entlüftungskanal 38, 40 soll sichergestellt werden, daß ein einwandfreies Ausgießen auch dann möglich ist, wenn die Kanne beim Ausgießen so schräg gehalten wird, daß der Augußkanal 32 vollständig mit Flüssigkeit durchsetzt wird. In der gestrichelt dargestellten Verschlußstellung ist der deckelseitige Entlüftungskanal 38 an seinem radialen Übergang 42 durch eine weitere zylindrische Abdichtfläche 44 im Bereich der Ausgußöffnung 24 dicht verschlossen. Zusätzlich kann zwischen dem kannenseitigen Teil des Bajonettverschlusses 28 und dem unteren Teil der Ausgußöffnung 24 eine weitere Ringdichtung 46 vorgesehen sein, die jedoch oberhalb des radialen Übergangs 42 des Entlüftungskanals 38, 40 angeordnet ist, um das Eindringen von Flüssigkeit in den oberen Teil der Ausgußöffnung zu verhindern.

Durch die dargestellte Kanne wird die Ausgußöffnung 24 in Öffnungsstellung des Verschlußstückes 26 freigegeben und in Verschlußstellung vollständig dicht verschlossen, so daß die Kanne z.B. auch bei einem versehentlichen Umstoßen gegen Auslaufen gesichert ist. Das Verschlußstück kann durch eine gezielte Öffnungsbewegung von der kannenseitigen Ausgußöffnung 24 gelöst und separat gereinigt werden. Das Einfüllen der Flüssigkeit in die Kanne erfolgt ebenfalls bei losgelöstem Verschlußstück durch die kannenseitige Ausgußöffnung 24.

Wie dem dargestellten Ausführungsbeispiel zu entnehmen ist, erlaubt die Erfindung eine sehr freie Gestaltung der Kanne, die sich von konventionellen Lösungen mit einem im oberen Kannenbereich an der Kanne angeordneten Ausgießer unterscheidet. Der Kannenkörper 12 kann aus Kunststoff oder Metall bestehen. Bei besonders ansprechenden Kannen kann das obere und untere Kannenteil 14, 16 in unterschiedlichen Farben bzw. Metallen ausgebildet sein. Das als Pistolengriff ausgebildete Verschlußstück 26 enthält zum schnellen Loslösen vom Kannenkörper den Bajonettverschluß 28. Außerdem enthält es den gesamten Ausgießmechanismus 32,34.

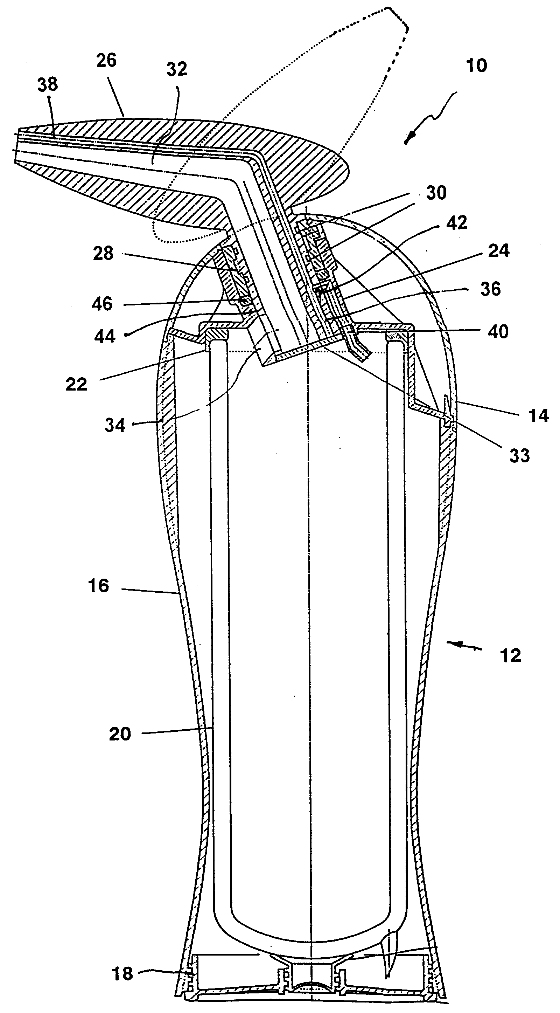

## Patentansprüche

1. Kanne, insbesondere Isolierkanne, mit einem nach oben hin offenen Kannenkörper (12), der durch ein drehbar in einer Ausgußöffnung (24) gehaltenes Verschlußstück (26) verschließbar ist, **dadurch gekennzeichnet**, daß in dem Verschlußstück (26) zumindest ein Ausgußkanal (32) angeordnet ist, der sich von der Kanneninnenseite nach außen erstreckt.

2. Isolierkanne nach Anspruch 1, dadurch gekennzeichnet, daß der Ausgußkanal (32) azentrisch zur Drehachse des Verschlußstücks (26) in das Kanneninnere mündet (34).

3. Kanne nach Anspruch 1 oder 2, dadurch gekennzeichnet, daß im Bereich der Ausgußöffnung (24) der Kanne (10) eine Absperrfläche (36) angeordnet ist, die in Schließstellung des Verschlußstücks (26) eine in das Kanneninnere mündende Eintrittsöffnung (34) des Ausgußkanals (32) verschließt.

4. Kanne nach einein der vorhergehenden Ansprüche, dadurch gekennzeichnet, daß das Verschlußstück (26) einen Entlüftungskanal (38) aufweist.

5. Kanne nach Anspruch 4, dadurch gekennzeichnet, daß das Verschlußstück (26) einen deckelseitigen Entlüftungskanal (38) und der Kannenkörper (12) einen kannenseitigen Entlüftungskanal (40) aufweisen, und daß der kannenseitige und der deckelseitige Entlüftungskanal (40, 38) in Öffnungsstellung des Verschlußstücks (26) miteinander verbunden (42) sind.

6. Kanne nach Anspruch 4 oder 5, dadurch gekennzeichnet, daß der Entlüftungskanal (40) in den oberen und bezüglich der Ausgußrichtung hinteren Bereich der Kanne (10) mündet.

7. Kanne nach einem der vorhergehenden Ansprüche, dadurch gekennzeichnet, daß das Verschlußstück (26), insbesondere durch einen Bajonettverschluß (28), mit dem Kannenkörper (12) lösbar verbunden ist.

8. Kanne nach einem der vorhergehenden Ansprüche, dadurch gekennzeichnet, daß das Verschlußstück (26) pistolenförmig ausgebildet ist, und daß dessen dem Griff entsprechende Schenkel in der kannenseitigen Ausgußöffnung (24) drehbar gehalten ist.

9. Kanne nach Anspruch 3 und 8, dadurch gekennzeichnet, daß das pistolenförmige Verschlußstück (26) einen Bajonettverschluß (28) zur Verbindung mit dem Kannenkörper (12) aufweist und mit einer Absperrfläche (36) zum Verschließen der Kanne (10) in Verschlußstellung des Verschlußstückes (26) zusammenwirkt.

10. Kanne nach einem der vorhergehenden Ansprüche, dadurch gekennzeichnet, daß der Ausgußkanal (32) eine radial in das Kanneninnere mündende Eintrittsöffnung (34) aufweist.

11. Kanne nach Anspruch 10, dadurch gekennzeichnet, daß die Eintrittsöffnung (34) der Kanne durch eine Abdichtfläcche (36) in der Ausgußöffnung (24) in Schließstellung des Verschlußstücks (26) verschließbar ist.

12. Kanne nach einem der vorhergehenden Ansprüche, dadurch gekennzeichnet, daß die Ausgußöffnung (24) des Kannenkörpers (12) von der Oberseite des Kannenkörpers (12) schräg nach oben geneigt ist.

13. Kanne nach einem der vorhergehenden Ansprüche, dadurch gekennzeichnet, daß unterhalb des Befestigungsbereichs (28) des Verschlußstückes (26) zumindest eine Dichtung (44) zum Abdichten des Bereichs zwischen dem Verschlußstück (26) und der Ausgußöffnung (24) vorgesehen ist.

14. Kanne nach einer der vorhergehenden Ansprüche, dadurch gekennzeichnet, daß die Verschlußstellung des Verschlußstücks (26) uni 180° relativ zur Öffnungsstellung versetzt ist.
